(19) Europäisches Patentamt
European Patent Office
Office européen des brevets

(11) **EP 4 636 117 A1**

(12) **EUROPEAN PATENT APPLICATION**
published in accordance with Art. 153(4) EPC

(43) Date of publication:
**22.10.2025 Bulletin 2025/43**

(21) Application number: **23903912.6**

(22) Date of filing: **11.12.2023**

(51) International Patent Classification (IPC):
*C22C 38/38* (2006.01)    *C23C 2/02* (2006.01)
*C23C 2/06* (2006.01)    *C23C 2/26* (2006.01)
*C23C 2/28* (2006.01)    *C23C 2/40* (2006.01)
*C22C 38/28* (2006.01)    *C22C 38/26* (2006.01)
*C22C 38/00* (2006.01)    *C22C 38/32* (2006.01)

(52) Cooperative Patent Classification (CPC):
**C21D 8/02; C22C 38/00; C22C 38/26; C22C 38/28;
C22C 38/32; C22C 38/38; C23C 2/02; C23C 2/06;
C23C 2/26; C23C 2/28; C23C 2/40**

(86) International application number:
**PCT/KR2023/020282**

(87) International publication number:
**WO 2024/128709 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 KR 20220172519**

(71) Applicant: POSCO Co., Ltd
**Pohang-si, Gyeongsangbuk-do 37859 (KR)**

(72) Inventors:
• **CHOI, Kang-Hyun**
  **Gwangyang-si, Jeollanam-do 57807 (KR)**
• **AHN, Yeon-Sang**
  **Gwangyang-si, Jeollanam-do 57807 (KR)**
• **HYUN, Cheol-Seung**
  **Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **HOT-DIP GALVANIZED STEEL SHEET, AND METHOD FOR MANUFACTURING SAME**

(57)    A hot-dip galvanized steel sheet and a method for manufacturing same are provided. The present invention relates to the manufacture of a high-strength hot-dip galvanized steel sheet with a tensile strength of 980 MPa or higher for use in automotive structural members, wherein the high-strength hot-dip galvanized steel sheet has a hole expansion ratio (HER) of 45% or more, a yield strength (YS) to HER relationship, HER*100/YS, of 5 or more, an elongation (EL) to HER relationship, HER*EL, of 700 or more, and a yield ratio (YS/TS) of 0.80 or more, and has no surface or internal LME cracks at welds.

[FIG. 1]

EP 4 636 117 A1

**Description**

Technical Field

The present disclosure relates to manufacturing of a hot-dip galvanized steel sheet used for automobile structural members, and more specifically, to a high-strength hot-dip galvanized steel sheet having excellent ductility, hole expandability and weldability, which does not cause weld surface and internal LME cracks, and a method for manufacturing the same.

Background Art

Recently, regulations for global environmental conservation in the automobile industry are becoming increasingly stricter. As a result, carbon reduction and fuel efficiency regulations are becoming increasingly stricter, and the use of high-strength steels is increasing to secure passenger safety in the event of accidents such as collisions and the like. In addition, high-strength steels with excellent yield strength are being used for structural members such as members, seat rails, pillars and the like to improve the impact resistance of the body. However, the high strength of steel sheets may lead to a decrease in ductility and formability. To resolve this problem, the development of materials that satisfy both high strength and high formability is required. In general, as the strength of steel sheets increases, elongation decreases, which causes a problem of reduced workability, and therefore the development of materials that may compensate for this is required. Generally, solid solution strengthening, precipitation strengthening, strengthening by grain refinement, transformation strengthening and the like have been studied as methods for strengthening steel. However, among the above methods, the steel using the solid solution strengthening and grain refinement has the problem that it is very difficult to manufacture high-strength steel with a tensile strength of 490 MPa or higher.

Precipitation-strengthened high-strength steel is a technology that secures strength by precipitating carbon and nitride by adding Nb, Ti, V and the like such as carbon and nitride forming elements, thereby refining the grains through suppression of grain growth by fine precipitates. The above technology has the advantage of being easy to secure high strength at low manufacturing costs, but has the disadvantage that high-temperature annealing should be performed to secure ductility by causing sufficient recrystallization because the recrystallization temperature rises rapidly due to fine precipitates. In addition, precipitation-strengthened steel strengthened by precipitating carbon and nitride in a ferrite matrix has the problem that it is difficult to obtain high-strength steel with a tensile strength of 600 MPa or higher.

Meanwhile, transformation-strengthening high-strength steels have been developed in various types, including Dual Phase (DP) steels comprising soft ferrite matrix and hard martensite dual phases, Transformation Induced Plasticity (TRIP) steels that secure high ductility by utilizing transformation-induced plasticity of retained austenite, Complexed Phase (CP) steels composed of a composite structure of ferrite and hard bainite or martensite, or the like. Recently, automotive steel sheets are required to have higher strength steel sheets for improving fuel efficiency or durability, and demand for ultra-high strength steel sheets with a tensile strength of 1180 MPa or more for body structures or reinforcing materials is increasing for collision safety and passenger protection. Thereamong, DP steels have excellent ductility and are the most commonly used automotive steel sheets, but have the disadvantages of low yield ratio (YR) and poor formability and workability. Furthermore, as steel sheets are gradually becoming more high-strength, cracks and wrinkles may occur during press forming of automobile parts, making it difficult to manufacture complex parts. Among ultra-high strength steels, TRIP and XF steels have high ductility and excellent yield ratios compared to existing DP steels, and thus have good workability, but have the disadvantage of poor weldability due to the addition of large amounts of Si and Al to secure high elongation. To overcome these shortcomings of existing ultra-high strength steels, ultra-high strength steels may be applied more widely to more complex parts by manufacturing steels that have a component system with good weldability by reducing the Si and Al components while satisfying a certain level or more of yield ratio. This may be obtained by utilizing a Quenching and Partitioning (Q&P) heat treatment, which is the latest heat treatment technology that may secure retained austenite.

As a prior art reference for simultaneously securing ductility and workability of the high tensile strength steel sheet, an invention disclosed in Patent Document 1 may be cited. In the invention disclosed in the patent document 1, it is necessary to control the heat treatment temperature so as to secure high elongation by forming retained austenite through precise control of the slow cooling and rapid cooling temperatures.

Another prior art reference is the invention disclosed in patent document 2. The invention disclosed in patent document 2 is characterized by manufacturing a steel sheet having a high yield ratio through a Q&P process and a painting process.

Another prior art reference is the invention disclosed in patent document 3. The invention disclosed in patent document 3 provides a method for manufacturing a high-strength cold-rolled steel sheet with a high bainite fraction by cooling to the bainite region, but there is a problem that the carbon partitioning effect is inferior to the Q&P process, resulting in inferior elongation.

[Prior art literature]

[Patent literature]

(Patent literature 1) Korean Patent Publication No. KR2018-0165176
(Patent literature 2) Japanese Patent Publication No. JP2010-090432
(Patent literature 3) Japanese Patent Publication No. JP2015-106696

Summary of Invention

Technical Problem

An aspect of the present disclosure is to provide a hot-dip galvanized steel sheet mainly used for automobile structural members and a method for manufacturing the same.
In addition, the technical subjects to be achieved in the present disclosure are not limited to the technical problems mentioned above, and other technical problems not mentioned herein will be clearly understood by those with ordinary knowledge in the technical field to which the present disclosure belongs from the description below.

Solution to Problem

According to an aspect of the present disclosure, a hot-dip galvanized steel sheet includes, in weight %, carbon (C): 0.08 to 0.16%, silicon (Si): 0.8% or less (excluding 0%), manganese (Mn): 2.0 to 3.0%, molybdenum (Mo): 0.4% or less (excluding 0%), chromium (Cr): 1.0% or less (excluding 0%), phosphorus (P): 0.1% or less (excluding 0%), sulfur (S): 0.02% or less (excluding 0%), aluminum (sol.Al): 0.6% or less (excluding 0%), titanium (Ti): 0.001 to 0.04%, niobium (Nb): 0.001 to 0.04%, nitrogen (N): 0.01% or less (excluding 0%), boron (B): 0.01% or less (excluding 0%), a remainder of Fe and unavoidable impurities, wherein the C, Si, Mn, Cr and Mo satisfy the following relationship 1,

the hot-dip galvanized steel sheet having, in area %, a microstructure including a sum of bainite and tempered martensite being 70% or more, 10% or less of ferrite, a remainder of fresh martensite and retained austenite, wherein in the hot-dip galvanized steel sheet, a hole expansion ratio (HER) is 45% or more, relationship HER*100/YS between a yield strength (YS) and the hole expansion ratio (HER) is 5 or more, and a yield ratio (YS/TS) is 0.80 or more.

$$[\text{Relationship 1}]$$

$$C+Si/30+Mn/20+(Cr+Mo)/5 \geq 0.3,$$

where C, Si, Mn, Cr and Mo represent the respective component content% in a matrix structure at a point of 1/4t in a thickness of a base steel sheet.

According to another aspect of the present disclosure, a method for manufacturing a hot-dip galvanized steel sheet includes,

a process of preparing a steel slab satisfying the above steel composition and relationship 1 and then reheating the same,
a process of hot-rolling the reheated steel slab so that a temperature at a finish rolling exit side is Ar3 to Ar3+50°C, and then coiling the same at 400 to 650°C and then cooling to room temperature at an average cooling rate of 0.1°C/s or less;
a process of cold-rolling the cooled hot-rolled steel sheet at a reduction ratio of 40 to 70% and manufacturing a cold-rolled steel sheet;
a process of continuously annealing the cold-rolled steel sheet at a temperature of Ac3-20°C to Ac3+20°C;
a process of first cooling the continuously annealed cold-rolled steel sheet to a temperature range of 500 to 550°C at an average cooling rate of 10°C/s or less, and second cooling to a temperature of 300 to 340°C at an average cooling rate of 5°C/s or more;
a process of reheating the second cooled cold-rolled steel sheet to a temperature of Ms or higher and then maintaining for 60 seconds or more; and
a process of cooling the maintained cold-rolled steel sheet to a temperature of 150°C or less at an average cooling rate of 5°C/s or more.

Advantageous Effects of Invention

As described above, the present disclosure has a useful effect in manufacturing a high-strength hot-dip galvanized steel sheet which satisfies the high ductility, which is a characteristic of DP steel, while having an excellent yield ratio (YS/TS) and hole expandability compared to DP steel of the related art by optimizing the components and the manufacturing process. In detail, there may be provided a high-strength hot-dip galvanized steel sheet having a hole expansion ratio (HER) of 45% or more, a yield strength (YS) and hole expansion ratio (HER) relationship HER*100/YS of 5 or more, an elongation (EL) and hole expansion ratio (HER) relationship HER*EL of 700 or more, and a yield ratio (YS/TS) of 0.80 or more. Accordingly, by preventing processing defects such as cracks or the like occurring during press forming, the steel sheet may be used in various ways for automotive structural members having complex shapes that require high formability. In addition, it also has the advantage of good weldability, as compared to existing TRIP steel, by reducing Si and Al.

Brief Description of Drawings

FIG. 1 is a drawing illustrating a change in the yield strength (YS) and hole expansion ratio (HER) relationship HER*100/YS according to relationship 1 between the invention steel and the comparative steel in an embodiment of the present disclosure.
FIG. 2 is a drawing illustrating a change in the hole expansion ratio (HER) according to relationship 1 between the invention steel and the comparative steel in an embodiment of the present disclosure.
FIG. 3 is a drawing illustrating a change in the yield ratio according to relationship 1 between the invention steel and the comparative steel in an embodiment of the present disclosure.
FIG. 4 is a drawing illustrating a change in the elongation (EL) and hole expansion ratio (HER) relationship HER*EL according to relationship 1 between the invention steel and the comparative steel in an embodiment of the present disclosure.

Best Mode for Invention

The terminology used herein is for describing specific embodiments only and is not intended to limit the present disclosure. The singular forms used herein include the plural forms as well, unless the phrases clearly indicate the contrary. The meaning "including" as used in the specification specifies a particular feature, region, integer, step, operation, element, and/or component, but does not exclude the presence or addition of other particular features, regions, integers, steps, operations, elements, components, and/or groups.

Unless otherwise defined, all terms, including technical and scientific terms, used herein have the same meaning as commonly understood by one of ordinary skill in the art to which this invention belongs. Terms defined in commonly used dictionaries are additionally interpreted as having meanings consistent with the relevant technical literature and the present disclosure, and are not interpreted in an ideal or very formal sense unless defined.

The inventors of the present disclosure have confirmed through experiments that by optimizing the components and manufacturing process to introduce 70% or more of tempered martensite or bainite, a remainder of fresh martensite, and retained austenite into the final microstructure, the yield ratio may be increased compared to DP steel of the related art, thereby improving workability, and furthermore, less than 5% of retained austenite is formed during the final cooling, thereby further improving ductility, and have completed the present disclosure based on the experimental results.

First, by the inventors of the present disclosure, a slab in which the steel components C+Si/30+Mn/20+(Cr+Mo)/5 in the matrix structure at a point of 1/4t thickness of the base steel sheet was controlled to be 0.3 or less, was hot-rolled so that the temperature at the exit of the finishing rolling became Ar3 to Ar3+50°C, was coiled at 400 to 650°C, and then cooled to room temperature at an average cooling rate of 0.1°C or less, thereby manufacturing a hot-rolled steel sheet in which carbides, serving as nucleation sites for austenite during annealing, are finely dispersed. And the hot-rolled steel sheet is cold-rolled at a reduction ratio of 40 to 70% to manufacture a cold-rolled steel sheet, and then, after continuous annealing at a temperature of Ac3-20°C to Ac3+20°C, the continuously annealed steel sheet is first cooled at an average cooling rate of 10°C or less to a temperature range of 500°C to 550°C, and then second cooled at an average cooling rate of 5°C or more to a temperature range of 300°C to 400°C to introduce fresh martensite. Thereafter, the steel sheet is reheated to a temperature of Ms or higher and then maintained for 60 seconds or more to form tempered martensite and bainite, thereby concentrating carbon in the surrounding untransformed austenite, and then cooled at an average cooling rate of 5°C or more to a temperature of 150°C or lower, thereby introducing fine fresh martensite into the remainder.

By controlling the components and manufacturing process described above, the fraction of ferrite and fresh martensite is reduced compared to the existing DP steel, and by introducing tempered martensite, bainite, and retained austenite, the yield ratio is increased compared to the existing DP steel, thereby securing workability. In addition, a large amount of mobile dislocations are formed around the retained austenite during plastic deformation, which helps improve ductility. The composite structure steel thus precisely controlled may secure ductility while maintaining a high yield ratio compared to the existing DP steel. Through this, an ultra-high strength hot-dip galvanized steel sheet with excellent ductility, hole expandability, and weldability may be manufactured.

Hereinafter, the technical configuration according to the present disclosure will be described in more detail with reference to various embodiments and the attached drawings.

First, the hot-dip galvanized steel sheet of the present disclosure having excellent ductility, hole expandability, and weldability, includes, in weight %, carbon (C): 0.08 to 0.16%, silicon (Si): 0.8% or less (excluding 0%), manganese (Mn) : 2.0 to 3.0%, molybdenum (Mo) : 0.4% or less (excluding 0%), chromium (Cr): 1.0% or less (excluding 0%), phosphorus (P): 0.1% or less (excluding 0%), sulfur (S): 0.02% or less (excluding 0%), aluminum (sol.Al): 0.6% or less (excluding 0%), titanium (Ti): 0.001 to 0.04%, niobium (Nb): 0.001 to 0.04%, nitrogen (N): 0.01% or less (excluding 0%), boron (B): 0.01% or less (excluding 0%), a remainder of Fe and unavoidable impurities.

C: 0.08 to 0.16%

Carbon (C) is a very important element added to strengthen the transformation structure. Carbon promotes the formation of hard martensite in composite structure steel, thereby improving the strength. As the carbon content increases, the amount of martensite increases. However, if the amount exceeds 0.16%, the strength of martensite increases, but the difference in strength with ferrite with a low carbon concentration becomes large. Due to this difference in strength, fracturing easily occurs at the interphase interface during plastic deformation, reducing ductility and work hardening rate. In addition, weldability is poor, and thus welding defects occur when processing customer parts. On the other hand, if the carbon content is lowered to 0.08% or less, it is difficult to secure desired strength, so it is desirable to limit the content to 0.08 to 0.16%. More preferably, the carbon content may be limited to the range of 0.09 to 0.15%.

Si: 0.8% or less (excluding 0%)

Silicon (Si) is a ferrite stabilizing element that promotes ferrite transformation and promotes carbon enrichment in untransformed austenite during the Q&P process, contributing to the formation of retained austenite. It is also effective in reducing the difference in hardness between phases by increasing the strength of ferrite through solid solution strengthening, and is a useful element that may secure strength without reducing the ductility of steel sheets. However, if it exceeds 0.8%, it causes surface scale defects, adversely affecting surface quality, and also reduces weldability and chemical treatment, so it is desirable to limit the addition amount to 0.8% or less, and more preferably, it may be limited to 0.6% or less.

Mn: 2.0 to 3.0%

Manganese (Mn) is an element that refines particles without reducing ductility, completely precipitates sulfur (S) in steel into MnS, prevents hot embrittlement caused by the formation of FeS, and also strengthens steel. At the same time, in composite structure steel, it plays a role in lowering the critical cooling rate at which the martensite phase is obtained, thereby facilitating the formation of martensite. If the manganese content is less than 2.0%, it is difficult to secure the strength targeted by the present disclosure. On the other hand, if the content exceeds 3.0%, there is a high possibility that problems such as weldability, hot-rollability and the like will occur, and martensite is formed excessively, making the material unstable, and Mn-Band (band of Mn oxide) is formed in the structure, which increases the risk of processing cracks and plate breakage. In addition, there is a problem that Mn oxide is eluted to the surface during annealing, significantly deteriorating the surface quality. Therefore, in the present disclosure, it is preferable to limit the Mn content to the range of 2.0 to 3.0%, and more preferably, it may be limited to the range of 2.2 to 2.8%.

Mo: 0.4% or less (excluding 0%)

Molybdenum (Mo) is an element that delays the transformation of austenite into pearlite and simultaneously improves the refinement and strength of ferrite. This Mo improves the hardenability of steel and has the advantage of forming martensite finely at grain boundaries to enable yield ratio control. However, as it is an expensive element, the manufacturing cost increases as its content increases, which is disadvantageous in terms of cost, so it is desirable to appropriately control its content. To obtain the above-mentioned effect, it is desirable to add up to a maximum of 0.4%, and if the content of Mo exceeds 0.4%, it causes a rapid increase in alloy cost, which reduces economic feasibility, and there is a problem that the ductility of the steel is reduced due to excessive grain refinement and solid solution strengthening effects. Therefore, in the present disclosure, it is desirable to limit the content of Mo to 0.4% or less, and more preferably, it may be limited to 0.2% or less. Meanwhile, in the present disclosure, 0% of Mo is excluded in consideration of the amount that is inevitably added during manufacturing.

Cr: 1.0% or less (excluding 0%)

Chromium (Cr) is an element added to improve the hardenability of steel and secure high strength. In addition, it is an element that plays a very important role in the formation of martensite, and is also advantageous in the manufacture of composite structure steel with high ductility by minimizing the decrease in elongation compared to the increase in strength. In particular, during the hot rolling process, Cr-based carbides such as $Cr_{23}C_6$ are formed, and some of these carbides are dissolved during the annealing process and some remain undissolved, so that the amount of solid solution C in martensite may be controlled to an appropriate level or less after cooling, thereby suppressing the occurrence of yield point elongation, making it an advantageous element in the manufacture of composite structure steel with a low yield ratio. However, if the content exceeds 1.0%, not only is the effect saturated, but there is also a problem of poor cold-rollability due to excessive increase in hot-rolled strength, and since the fraction of Cr-based carbides increases and coarsens, the size of martensite after annealing coarsens, resulting in a decrease in elongation. Therefore, in the present disclosure, it is preferable to limit the content of Cr to 1.0% or less, and more preferably, it may be limited to 0.8% or less. Meanwhile, in the present disclosure, 0% is excluded in consideration of the amount of Cr inevitably added during manufacturing.

P: 0.1% or less (excluding 0%)

P is a substitutional element with the greatest solid solution strengthening effect, and it is the most advantageous element for improving in-plane anisotropy and securing strength without significantly reducing formability. However, if it is added in a certain amount or more excessively, the possibility of brittle fracture increases significantly, and since there is a problem that the slab may break during hot rolling and acts as an element that impairs the surface properties of the plating, the content is limited to a maximum of 0.1% in the present disclosure, but 0% is excluded in consideration of the level that is inevitably added.

S: 0.02% or less (excluding 0%)

Sulfur (S) is an impurity element that is inevitably added to steel and is an element that reduces ductility and weldability, so it is important to manage the same as low as possible. In particular, there is a problem that it increases the possibility of causing red-hot brittleness, so it is desirable to control its content to 0.02% or less. However, 0% is excluded considering the level that is inevitably added during the manufacturing process.

sol.Al: 0.6% or less (excluding 0%)

Acid-soluble aluminum (sol.Al) is an element added to refine the grain size of steel and deoxidize, and is a ferrite stabilizing element similar to Si. In addition, it is an effective component for distributing carbon in ferrite to austenite to improve martensite hardenability and forming retained austenite. Moreover, it is a useful element that may effectively suppress precipitation of carbides in bainite when maintained in the bainite region during annealing, thereby improving the ductility of the steel sheet. However, if the content exceeds 0.6%, although it is advantageous for increasing strength due to the grain refinement effect, there is a problem that not only does it increase the possibility of causing surface defects in the plated steel sheet due to excessive formation of inclusions during the steelmaking casting operation, but it also causes an increase in the manufacturing cost. Therefore, in the present disclosure, it is preferable to control the content of sol.Al to 0.6% or less, and more preferably, it may be limited to 0.4% or less.

Ti, Nb: 0.001 to 0.04% each

Titanium (Ti) and niobium (Nb) are respectively effective elements for increasing the strength of steel sheet and for refining the crystal grains by forming nano precipitates. When these elements are added, they combine with carbon to form very fine nano precipitates, which strengthen the matrix structure and play a role in reducing the hardness difference between phases. If the contents of Ti and Nb are less than 0.001% each, it is difficult to secure this effect, and if the contents exceed 0.04% each, the manufacturing costs increase and the ductility may be significantly reduced due to excessive precipitates. Therefore, the contents may be limited to 0.001 to 0.04%.

N: 0.01% or less (excluding 0%)

Nitrogen (N) is an effective component for stabilizing austenite, but if it exceeds 0.01%, there is a problem that the cost of refining steel increases rapidly, and the risk of cracks occurring during casting due to AlN formation or the like greatly increases, and thus it is desirable to limit the upper limit thereof to 0.01%. However, considering the level that is inevitably added, 0% is excluded.

B: 0.01% or less (excluding 0%)

Boron (B) is a component that delays the transformation of austenite into pearlite during the cooling process during annealing, and is a hardening element suppressing ferrite formation and promoting martensite formation. However, if the content exceeds 0.01%, excessive B may be concentrated on the surface, which may result in deterioration of plating adhesion, and thus the content is controlled to 0.01% or less, and more preferably, it is added in 0.005% or less. Meanwhile, in the present disclosure, 0% of B is excluded considering the level that is inevitably added.

Sb: 0.05% or less (excluding 0%)

In the present disclosure, antimony (Sb) may also be optionally included in the range of 0.05% or less. Antimony (Sb) is distributed in grain boundaries and delays the diffusion of oxidizing elements such as Mn, Si, Al and the like through grain boundaries, thereby suppressing the surface concentration of oxides, and is also excellent in suppressing the coarsening of surface concentrations due to temperature increase and changes in the hot rolling process. However, when the content exceeds 0.05%, not only is the effect saturated, but the manufacturing cost and workability are inferior, and thus it is preferable to limit the content to 0.05% or less, and more preferably, it is added in the amount of 0.03% or less. Meanwhile, in the present disclosure, 0% is excluded considering the level at which Sb is inevitably added.

[Relationship 1]

$$C+Si/30+Mn/20+(Cr+Mo)/5 \geq 0.3$$

In this case, C, Si, Mn, Cr, and Mo represent the respective component content% in the matrix structure at the point of 1/4t thickness of the base steel sheet.
In the present disclosure, it is important to control the contents of C, Si, Al, Cr, and Mo among the alloy components in the matrix structure at the point of 1/4t thickness of the base steel sheet, to satisfy the above relationship 1.
Si and Al are ferrite stabilizing elements that promote ferrite transformation and promote C enrichment into untransformed austenite, thereby contributing to the formation of retained austenite and martensite. C is also an element that contributes to the formation and fraction control of martensite by promoting C enrichment in untransformed austenite. However, C, Si, and Al have a negative effect on weldability, causing cracks on the weld surface and inside thereof.
On the other hand, although Mn, Cr, Mo, and B are elements that contribute to improving hardenability, the effect thereof on enriching C in austenite is relatively low compared to C, Si, and Al. Therefore, it is very important to properly adjust the ratio of C, Si, and Al and other hardenable elements Mn, Cr, Mo, and B.
If the value defined by the above relationship 1 is 0.3 or more, the yield strength (YS) and hole expansion ratio (HER) relationship HER*100/YS may be secured as 5 or more. In addition, the fraction of bainite and tempered martensite may be secured as 70% or more, and at the same time, the interphase hardness difference may be reduced to secure a hole expandability value of 45% or more. Furthermore, the yield ratio (YS/TS) may also be secured as 0.8 or more. However, if the value defined by the above relationship 1 is less than 0.3, the aforementioned effect cannot be expected.
In addition to the above components, a remainder of Fe and unavoidable impurities may be included in the present disclosure.
Meanwhile, the hot-dip galvanized steel sheet of the present disclosure is a composite structure steel sheet that may secure a certain degree of ductility while improving workability by increasing the yield ratio compared to existing DP steel. To this end, in addition to the alloy composition described above, it is necessary to satisfy the following microstructure and phase fraction control conditions.
In detail, the hot-dip galvanized steel sheet of the present disclosure has a microstructure including a sum of bainite and tempered martensite of 70% or more, ferrite of 10% or less, and a remainder of fresh martensite and retained austenite in area %.
To satisfy the characteristics of DP steel, such as lean composition and high ductility, while improving the yield ratio (YS/TS) compared to DP steel of the related art, control of the structure and composition and careful heat treatment are essential. First, it is important to introduce a small amount of retained austenite. Retained austenite causes transformation-induced plasticity, which helps improve the ductility of the steel sheet. To introduce such retained austenite, the Quenching & Partitioning (Q&P) process is performed by cooling to a temperature of Ms or less during rapid cooling to form fresh martensite, and then reheating to a temperature of Ms or more. At this time, a large amount of tempered martensite and bainite are formed, and C is stably distributed and contributes to the formation of a small amount of retained austenite in the final structure. To secure high hole expandability, it is also important to control to avoid the formation of structures other than tempered martensite and bainite as much as possible. Single-phase region annealing prevents the formation of ferrite during annealing, and the addition of hardenable elements prevents the formation of ferrite even in the slow cooling section. In addition, some bainite is introduced in the slow cooling section to improve ductility. In addition, the formation of fresh martensite is suppressed as much as possible through the Q&P process of rapid cooling to Ms temperature or less and reheating to Ms temperature or more. In addition, by precipitating fine nano-precipitates within ferrite, the hardness difference between phases may be additionally reduced, thereby improving workability. Finally, by introducing a small amount of fresh martensite during the final cooling, the desired strength may be secured.

Therefore, in the microstructure forming the hot-dip galvanized steel sheet of the present disclosure, the sum of bainite and tempered martensite is controlled to be 70 area% or more. If the sum of bainite and tempered martensite is less than 70 area%, there is a problem that the desired yield ratio and hole expandability cannot be secured. More preferably, the sum of bainite and tempered martensite may be limited to 75 area% or more.

In addition, in the microstructure forming the hot-dip galvanized steel sheet of the present disclosure, it is preferable to limit the ferrite fraction to 10% or less. If the fraction exceeds 10%, there is a problem that the desired yield ratio and hole expandability cannot be secured. More preferably, the fraction of the ferrite structure may be limited to 8 area% or less.

And the hot-dip galvanized steel sheet of the present disclosure is composed by including a remainder of fresh martensite and retained austenite.

At this time, in the present disclosure, it is preferable to limit the retained austenite area fraction to less than 5% (excluding 0%). If the retained austenite fraction is to be 5% or more, the Si content should increase, and at this time, the LME problem may occur. More preferably, the retained austenite fraction may be limited to a range of 1 to 4 area%.

The hot-dip galvanized steel sheet of the present disclosure having the microstructure as described above has an excellent yield ratio compared to DP steel of the related art due to the effect of uniformization of the structure, thereby improving workability and formability. Specifically, through this, a high-strength hot-dip galvanized steel sheet having a hole expansion ratio (HER) of 45% or more, a yield strength (YS) and hole expansion ratio (HER) relationship HER*100/YS of 5 or more, an elongation (EL) and hole expansion ratio (HER) relationship HER*EL of 700 or more, and a yield ratio (YS/TS) of 0.80 or more, and a tensile strength of 980 MPa or more, which has excellent ductility, hole expandability, and weldability without occurrence of weld surface and internal LME cracks, may be provided.

Next, a method for manufacturing the hot-dip galvanized steel sheet of the present disclosure will be described in detail.

The method for manufacturing a hot-dip galvanized steel sheet of the present disclosure includes a process of preparing a steel slab satisfying the above-described steel composition and relationship 1, and then reheating the steel slab; a process of hot-rolling the reheated steel slab so that the temperature at the finish rolling exit side becomes Ar3 to Ar3+50°C, and then coiling at 400 to 650°C and then cooling to room temperature at an average cooling rate of 0.1°C/s or less; a process of cold-rolling the cooled hot-rolled steel sheet at a reduction ratio of 40 to 70% to manufacture a cold-rolled steel sheet; a process of continuously annealing the cold-rolled steel sheet at a temperature of Ac3-20°C to Ac3+20°C; a process of first cooling the continuously annealed cold-rolled steel sheet to a temperature range of 500 to 550°C at an average cooling rate of 10°C/s or less, and second cooling the same to a temperature of 300 to 340°C at an average cooling rate of 5°C/s or more; a process of reheating the second cooled cold-rolled steel sheet to a temperature of Ms or higher and then maintaining for 60 seconds or more; and a process of cooling the maintained cold-rolled steel sheet to a temperature of 150°C or less at an average cooling rate of 5°C or more.

First, in the present disclosure, the steel slab formed as described above is reheated under normal conditions. The slab reheating process is a process of heating the steel slab to smoothly perform a subsequent rolling process and sufficiently obtain the target properties of the steel sheet. The present disclosure is not particularly limited to these reheating conditions, and normal reheating conditions are sufficient. For example, reheating is performed in a temperature range of 1100-1300°C.

Subsequently, in the present disclosure, the reheated steel slab is hot-rolled so that the temperature at the finish rolling exit side is Ar3 to Ar3+50°C, and then coiled at 400 to 650°C, and then cooled to room temperature at an average cooling rate of 0.1°C/s or less.

The reheated steel slab is finish hot-rolled under normal conditions at an $Ar_3$ transformation point or higher. The present disclosure is not limited to specific hot-rolling conditions at this time, and a normal hot-rolling temperature may be used. For example, the finish hot-rolling may be performed in a temperature range of 800 to 1000°C.

Afterwards, in the present disclosure, the finish hot-rolled steel sheet is coiled in a temperature range of 400 to 650°C and then cooled to room temperature at an average cooling rate of 0.1°C/s or less, thereby manufacturing a hot-rolled steel sheet in which carbides that serve as austenite nucleation sites are finely dispersed. By evenly dispersing the fine carbides during the hot rolling process, the carbides are dissolved in the subsequent annealing process to form finely dispersed austenite, which ultimately allows fine martensite to be uniformly dispersed after the annealing.

In addition, in the present disclosure, the cooled hot-rolled steel sheet is cold-rolled at a reduction ratio of 40 to 70% to manufacture a cold-rolled steel sheet.

If the cold reduction ratio is less than 40%, it is difficult to secure the target thickness and also difficult to correct the shape of the steel sheet, while if it exceeds 70%, there is a high possibility of cracks occurring at the edge of the steel sheet and there is a problem of causing a cold-rolling load. Therefore, in the present disclosure, it is preferable to limit the cold reduction ratio to 40 to 70%.

Subsequently, in the present disclosure, the cold-rolled steel sheet is continuously annealed at a temperature of Ac3-20°C to Ac3+20°C.

In the present disclosure, the cold-rolled steel sheet is continuously annealed at a temperature range of Ac3-20°C to Ac3+20°C. The continuous annealing operation is to form an austenite single phase and to promote uniformity of the structure. If the continuous annealing temperature is lower than Ac3-20°C, it is difficult to secure a sufficient austenite fraction, so that the ferrite fraction increases after annealing, and a uniform microstructure cannot be secured. On the other hand, if it exceeds Ac3+20°C, productivity decreases, excessive austenite is formed, and the grain size becomes too coarse, making it difficult to secure the desired strength. In addition, surface concentration due to elements such as Si, Mn, B and the like that worsen the surface quality may be aggravated, thereby deteriorating the surface quality. In consideration of this, in the present disclosure, it is preferable to limit the continuous annealing temperature to Ac3-20°C to Ac3+20°C. More preferably, continuous annealing may be performed in a temperature range of 810 to 850°C.

In addition, in the present disclosure, the continuously annealed cold-rolled steel sheet is first cooled to a temperature range of 500 to 550°C at an average cooling rate of 10°C/s or less, and then second cooled to a temperature of 300 to 340°C at an average cooling rate of 5°C/s or more to introduce fresh martensite. At this time, in the present disclosure, the steel sheet may be cooled using $H_2$ gas during the second cooling.

In the present disclosure, it is very important to control the slow cooling temperature to 500 to 550°C during the first cooling. If it exceeds 550°C, bainite is not introduced in the slow cooling section, and thus the desired ductility cannot be secured. In addition, if it is controlled to less than 500°C, the fraction of bainite increases excessively, and thus the desired strength cannot be secured.

In addition, it is very important to control the rapid cooling temperature during the second cooling to 300 to 340°C, the martensite formation temperature Ms or lower. If it exceeds 340°C, the fraction of initially formed martensite is very small or martensite formation is difficult, and thus it is difficult to form tempered martensite and bainite of the desired fraction during the final cooling, and thus the desired hole expandability cannot be obtained. In addition, if it is lowered to less than 300°C, the fraction of tempered martensite and bainite is excessive, so it is difficult to form fresh martensite of the desired fraction during the final cooling, and thus the desired strength cannot be obtained.

Subsequently, in the present disclosure, the second cooled cold-rolled steel sheet is reheated to a temperature of Ms or higher and then maintained for 60 seconds or more.

In the present disclosure, it is important to form a desired microstructure by controlling the slow cooling temperature, rapid cooling temperature, and reheating temperature in the Q&P process of reheating to Ms or more, after the first slow cooling process and the second rapid cooling process of cooling to Ms or lower described above. By maintaining the reheated cold-rolled steel sheet for 60 seconds or more, tempered martensite and bainite are formed and carbon is concentrated in the surrounding untransformed austenite.

Thereafter, in the present disclosure, the maintained cold-rolled steel sheet is cooled to a temperature of 150°C or less at an average cooling rate of 5°C/s or more to introduce fine fresh martensite.

In addition, in the present disclosure, if necessary, the cooled steel sheet may be subjected to a hot-dip galvanized process to manufacture a hot-dip galvanized steel sheet. In detail, the cooled cold-rolled steel sheet may be immersed in a zinc pot of 440 to 480°C, then heated in a GA furnace at 500 to 540°C and then cooled to produce an alloyed hot-dip galvanized steel sheet, or the hot-dip galvanized steel sheet may be manufactured by cooling without alloying after the zinc pot immersion.

In addition, in the present disclosure, temper rolling of less than 1% may be performed on the cold-rolled steel sheet or the hot-dip galvanized steel sheet.

Mode for Invention

Hereinafter, the present disclosure will be described in detail through preferred embodiments. However, it should be noted that the following embodiments are only intended to illustrate the present disclosure in more detail and are not intended to limit the scope of the rights of the present disclosure.

(Example)

After preparing steel slabs having the compositions illustrated in Table 1 below, they were reheated in the temperature range of 1050 to 1250°C and final hot-rolled in the temperature range of Ar3+50°C, which is the $Ar_3$ transformation point temperature or more. The hot-rolled steel sheets as described above were coiled at 400 to 650°C and then cooled at a cooling rate of 0.1°C or less per second to manufacture hot-rolled steel sheets. The hot-rolled steel sheets were pickled and then cold-rolled at a reduction ratio of 40-70%, and then continuous annealing was performed under the conditions illustrated in Table 2 below and Q&P heat treatment was performed. Then, after cooling to a temperature of 150°C or less at an average cooling rate of 5°C or more, it was immersed in a 460°C molten zinc pot for 5 seconds, and then heated in a GA furnace at 520°C for about 2 seconds and then cooled to manufacture an alloyed hot-dip galvanized steel sheet. Then, temper rolling of less than 1% was performed on this alloyed hot-dip galvanized steel sheet. Meanwhile, in this experiment, during the Q&P heat treatment, the cooling rate during the first cooling was 6°C/s, the cooling rate during the second cooling was 15°C/s, and the holding time after reheating was 200 seconds, which were applied identically.

The mechanical properties and microstructure properties of respective steel sheets manufactured as described above were evaluated, and the results are illustrated in Table 3 below. At this time, a tensile test on each test piece was performed in the C direction using the JIS standard to evaluate the tensile properties. The microstructure fraction used the results obtained by analyzing the matrix structure at the 1/4t point of the annealed steel sheet thickness. In detail, the ferrite, bainite, martensite, and austenite fractions were measured using FE-SEM and an image analyzer after Nital corrosion. In addition, the hole expandability was measured using a hole expandability tester. In addition, the occurrence or not of spot welding LME cracks was evaluated.

[Table 1]

| Steel Grade | Composition (weight%) | | | | | | | | | | | | Relationship 1 |
| --- | --- | --- | --- | --- | --- | --- | --- | --- | --- | --- | --- | --- | --- |
| | C | Si | Mn | P | S | S.Al | Nb | Ti | B | Cr | Mo | Sb | |
| Invention Steel 1 | 0.15 | 0.4 | 2.6 | 0.01 | 0.001 | 0.03 | 0.02 | 0.02 | 0.000 2 | 0.2 | 0.1 | | 0.360 |
| Invention Steel2 | 0.1 | 0.5 | 2.3 | 0.01 | 0.001 | 0.1 | 0.03 | 0.02 | 0.001 7 | 0.9 | 0.05 | 0.02 | 0.422 |
| Invention Steel 3 | 0.14 | 0.5 | 2.7 | 0.01 | 0.001 | 0.05 | 0.02 | 0.02 | 0.000 3 | 0.3 | 0.12 | | 0.376 |
| Invention Steel 4 | 0.09 | 0.7 | 2.5 | 0.01 | 0.001 | 0.012 | 0.03 | 0.02 | 0.001 2 | 0.5 | 0.1 | | 0.358 |
| Comparative Steel 1 | 0.08 | 0.1 | 2.6 | 0.01 | 0.001 | 0.03 | 0.03 | 0.05 | 0.002 5 | 0.4 | 0.02 | | 0.297 |
| Comparative Steel 2 | 0.1 | 0.8 | 2.8 | 0.01 | 0.001 | 0.03 | - | - | 0.000 2 | 0.08 | 0.03 | | 0.289 |
| Comparative Steel 3 | 0.13 | 0.3 | 2.4 | 0.01 | 0.001 | 0.04 | 0.02 | 0.02 | 0.001 | 0.02 | 0.17 | | 0.298 |
| Comparative Steel 4 | 0.11 | 0.2 | 2.5 | 0.01 | 0.001 | 0.03 | 0.02 | 0.02 | 0.001 7 | 0.05 | 0.04 | 0.03 | 0.260 |
| * In Table 1, remainder of components are Fe and unavoidable impurities, Relationship 1 is C+Si/30+Mn/20+(Cr+Mo)/5 | | | | | | | | | | | | | |

[Table 2]

| Steel Grade | Annealing Temperature(°C) | First Cooling End Temperature(°C) | Second Cooling End Temperature(°C) | Reheating Temperature(°C) | Remark |
|---|---|---|---|---|---|
| Invention Steel 1 | 820 | 530 | 320 | 440 | Invention Example1 |
| | 850 | 530 | 320 | 440 | Comparative Example 1 |
| | 780 | 530 | 320 | 440 | Comparative Example 2 |
| | 820 | 590 | 324 | 445 | Comparative Example 3 |
| | 820 | 480 | 321 | 442 | Comparative Example 4 |
| | 820 | 530 | 380 | 442 | Comparative Example 5 |
| | 820 | 530 | 270 | 441 | Comparative Example 6 |
| Invention Steel 2 | 820 | 530 | 320 | 440 | Invention Example 2 |
| Invention Steel 3 | 824 | 530 | 315 | 440 | Invention Example 3 |
| Invention Steel 4 | 831 | 530 | 316 | 440 | Invention Example 4 |
| Comparative Steel 1 | 820 | 530 | 320 | 440 | Comparative Example 7 |
| Comparative Steel 2 | 818 | 533 | 320 | 450 | Comparative Example 8 |
| Comparative Steel 3 | 821 | 532 | 320 | 434 | Comparative Example 9 |
| Comparative Steel 4 | 820 | 535 | 321 | 441 | Comparative Example 10 |

[Table 3]

| Steel Grade | Phase Fraction (area%) | | | | Mechanical Properties | | | | | | | LME | Remark |
|---|---|---|---|---|---|---|---|---|---|---|---|---|---|
| | F | B+TM | FM | RA | YS (MPa) | TS (MPa) | E1 (%) | Yield Ratio | HER (%) | HER* 100/YS | HER*RL | | |
| Invention Steel 1 | 3 | 75 | 19 | 3 | 834 | 1025 | 13 | 0.81 | 54 | 6.35 | 702 | OK | Invention Example 1 |
| | - | 79 | 18 | 3 | 888 | 1052 | 10 | 0.84 | 39 | 4.39 | 390 | OK | Comparative Example 1 |
| | 25 | 31 | 43 | 1 | 689 | 934 | 14 | 0.74 | 21 | 3.05 | 294 | OK | Comparative Example 2 |
| | 4 | 59 | 35 | 2 | 854 | 1115 | 8 | 0.77 | 42 | 4.92 | 336 | OK | Comparative Example 3 |
| | 4 | 73 | 21 | 2 | 695 | 960 | 12 | 0.72 | 35 | 5.04 | 420 | OK | Comparative Example 4 |
| | 1 | 65 | 31 | 3 | 832 | 1095 | 9 | 0.76 | 26 | 3.13 | 234 | OK | Comparative Example 5 |
| | - | 90 | 7 | 3 | 903 | 959 | 11 | 0.94 | 70 | 7.75 | 770 | OK | Comparative Example 6 |
| Invention Steel2 | 6 | 66 | 15 | 3 | 836 | 1007 | 15 | 0.83 | 59 | 7.06 | 885 | OK | Invention Example 2 |
| Invention Steel 3 | - | 71 | 26 | 3 | 888 | 1075 | 12 | 0.83 | 52 | 5.86 | 624 | OK | Invention Example 3 |
| Invention Steel 4 | 2 | 75 | 19 | 4 | 856 | 1022 | 13 | 0.84 | 55 | 6.43 | 715 | OK | Invention Example 4 |
| Comparative Steel 1 | 3 | 53 | 44 | - | 744 | 956 | 11 | 0.78 | 34 | 4.57 | 374 | OK | Comparative Example 7 |
| Comparative Steel 2 | 26 | 49 | 19 | 6 | 734 | 934 | 15 | 0.79 | 25 | 3.41 | 375 | OK | Comparative Example 8 |
| Comparative Steel 3 | 11 | 453 | 45 | 1 | 750 | 976 | 12 | 0.77 | 28 | 3,73 | 336 | OK | Comparative Example 9 |
| Comparative Steel 4 | 11 | 47 | 42 | - | 752 | 959 | 13 | 0.78 | 27 | 3.59 | 351 | OK | Comparative Example 10 |
| * In Table 3, F referents ferrite, B+TM referents bainite+tempered martensite, FM referents fresh martensite, and RA referents retained austenite. | | | | | | | | | | | | | |

As illustrated in Table 1-3 above, in the case of Invention Examples 1-4, in which the steel composition range, manufacturing conditions, and steel microstructure meet the scope of the present disclosure, the hole expansion ratio (HER) was 45% or more, the yield strength (YS) and hole expansion ratio (HER) relationship HER*100/YS was 5 or more, and the elongation (EL) and hole expansion ratio (HER) relationship HER*EL was 700 or more. In addition, it can be seen that the material and hole expandability and weldability of the steel sheet targeted in the present disclosure may be secured as the yield ratio (YS/TS) is 0.80 or more without occurrence of weld surface and internal LME cracks.

In contrast, in the case of all of Comparative Examples 1 to 10, where the steel composition (relationship 1) and/or the steel manufacturing process are outside the scope of the present disclosure or the steel microstructure fraction is outside the scope of the present disclosure, it can be seen that the yield strength (YS) and hole expansion ratio (HER) relationship HER*100/YS is less than 5, or the elongation (EL) and hole expansion ratio (HER) relationship HER*EL is less than 700, the yield ratio (YS/TS) is less than 0.80, and the hole expandability is less than 45%. Therefore, it can be seen that the strength, ductility, hole expandability, and weldability of the steel sheet targeted by the present disclosure cannot be secured at the same time.

In detail, Comparative Example 1 had a low elongation and failed to secure hole expandability because the annealing temperature was too high, and Comparative Example 2 had a too low annealing temperature, so that ferrite of two-phase region was excessively formed and the target strength could not be obtained.

In Comparative Example 3, the first cooling end temperature was too high and thus it failed to secure bainite, so the YS was too high and the elongation was not good.

Comparative Example 4 had too low first cooling end temperature and failed to secure the target strength, and Comparative Example 5 had too high second cooling end temperature and failed to secure enough tempered martensite, resulting in failure to secure hole expandability.

In addition, Comparative Example 6 had too low second cooling end temperature and excessive tempered martensite and bainite were formed, resulting in poor strength.

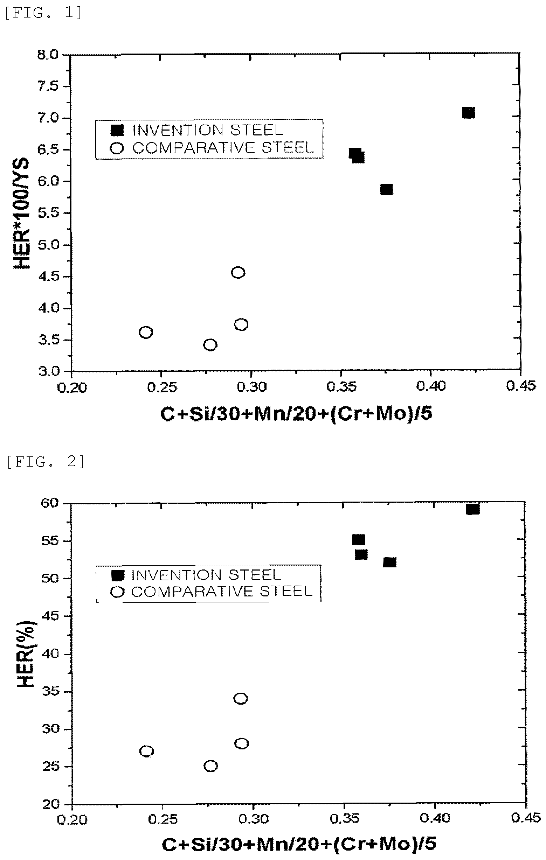

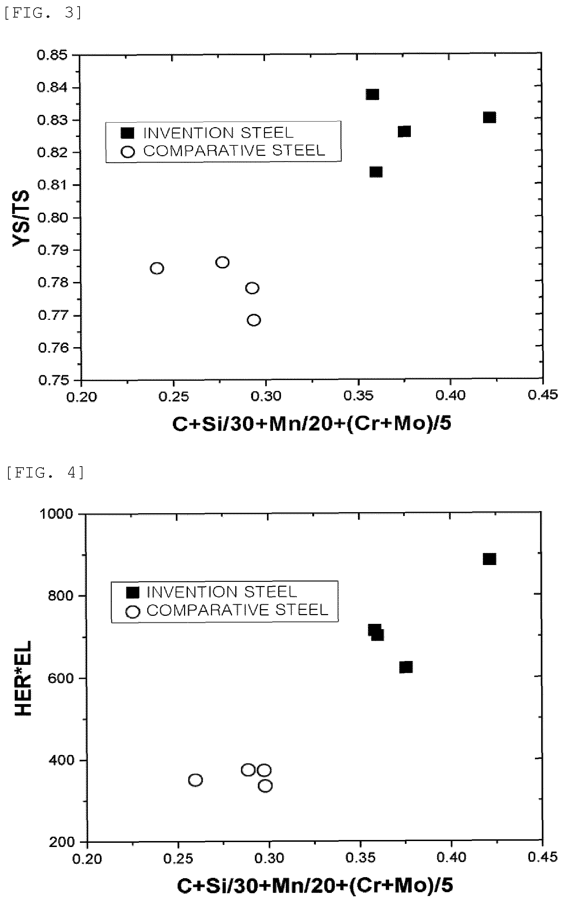

Meanwhile, FIG. 1 is a drawing illustrating the change in the yield strength (YS) and hole expansion ratio (HER) relationship HER*100/YS according to relationship 1 between the invention steel and the comparative steel in an embodiment of the present disclosure, FIG. 2 is a drawing illustrating the change in the hole expansion ratio (HER) according to relationship 1 between the invention steel and the comparative steel in an embodiment of the present disclosure, FIG. 3 is a drawing illustrating the change in the yield ratio according to relationship 1 between the invention steel and the comparative steel in an embodiment of the present disclosure, and FIG. 4 is a drawing illustrating the change in the elongation (EL) and hole expansion ratio (HER) relationship HER*EL. Meanwhile, in the above FIGS. 1-4, the invention steel refers to the steel corresponding to invention examples 1-4, and the comparative steel refers to the steel corresponding to comparative examples 7-10.

As described above, in the detailed description of the present disclosure, preferred embodiments of the present disclosure have been described, but it is obvious that various modifications are possible within the scope of the present disclosure by those skilled in the art to which the present disclosure pertains. Therefore, the scope of the rights of the present disclosure should not be limited to the described embodiments, but should be defined not only by the claims described below but also by equivalents thereof.

## Claims

1. A hot-dip galvanized steel sheet comprising:

   in weight %, carbon (C): 0.08 to 0.16%, silicon (Si): 0.8% or less (excluding 0%), manganese (Mn): 2.0 to 3.0%, molybdenum (Mo): 0.4% or less (excluding 0%), chromium (Cr): 1.0% or less (excluding 0%), phosphorus (P): 0.1% or less (excluding 0%), sulfur (S): 0.02% or less (excluding 0%), aluminum (sol.Al): 0.6% or less (excluding 0%), titanium (Ti): 0.001 to 0.04%, niobium (Nb): 0.001 to 0.04%, nitrogen (N): 0.01% or less (excluding 0%), boron (B): 0.01% or less (excluding 0%), a remainder of Fe and unavoidable impurities, wherein the C, Si, Mn, Cr and Mo satisfy the following relationship 1,
   the hot-dip galvanized steel sheet having, in area %, a microstructure comprising a sum of bainite and tempered martensite being 70% or more, 10% or less of ferrite, a remainder of fresh martensite and retained austenite, wherein in the hot-dip galvanized steel sheet, a hole expansion ratio (HER) is 45% or more, relationship HER*100/YS between a yield strength (YS) and the hole expansion ratio (HER) is 5 or more, relationship HER*EL between an elongation (EL) and the hole expansion ratio (HER) is 700 or more, and a yield ratio (YS/TS) is 0.80 or more,

   $$[\text{Relationship 1}]$$

   $$C+Si/30+Mn/20+(Cr+Mo)/5 \geq 0.3,$$

   where C, Si, Mn, Cr and Mo represent carbon steel component content% in a matrix structure at a point of 1/4t in a thickness of a base steel sheet.

2. The hot-dip galvanized steel sheet of claim 1, wherein a fraction of the retained austenite is less than 5% (excluding 0%) in area %.

3. The hot-dip galvanized steel sheet of claim 2, wherein the fraction of the retained austenite satisfies 1 to 4% in area %.

4. The hot-dip galvanized steel sheet of claim 1, further comprising antimony (Sb): 0.05% or less (excluding 0%).

5. A method for manufacturing a hot-dip galvanized steel sheet, comprising:

a process of preparing a steel slab and reheating the steel slab, the steel slab containing, in weight %, carbon (C): 0.08 to 0.16%, silicon (Si): 0.8% or less (excluding 0%), manganese (Mn): 2.0 to 3.0%, molybdenum (Mo): 0. 4% or less (excluding 0%), chromium (Cr): 1.0% or less (excluding 0%), phosphorus (P): 0.1% or less (excluding 0%), sulfur (S): 0.02% or less (excluding 0%), aluminum (sol.Al): 0.6% or less (excluding 0%), titanium (Ti): 0.001 to 0.04%, niobium (Nb): 0.001 to 0.04%, nitrogen (N): 0.01% or less (excluding 0%), boron (B): 0.01% or less (excluding 0%), a remainder of Fe and unavoidable impurities, wherein the C, Si, Mn, Cr and Mo satisfy relationship 1 below;

a process of hot-rolling the reheated steel slab so that a temperature at a finish rolling exit side is Ar3 to Ar3+50°C, and then coiling the same at 400 to 650°C and then cooling to room temperature at an average cooling rate of 0.1°C/s or less;

a process of cold-rolling the cooled hot-rolled steel sheet at a reduction ratio of 40 to 70% and manufacturing a cold-rolled steel sheet;

a process of continuously annealing the cold-rolled steel sheet at a temperature of Ac3-20°C to Ac3+20°C;

a process of first cooling the continuously annealed cold-rolled steel sheet to a temperature range of 500 to 550°C at an average cooling rate of 10°C/s or less, and second cooling to a temperature of 300 to 340°C at an average cooling rate of 5°C/s or more;

a process of reheating the second cooled cold-rolled steel sheet to a temperature of Ms or higher and then maintaining for 60 seconds or more; and

a process of cooling the maintained cold-rolled steel sheet to a temperature of 150°C or less at an average cooling rate of 5°C/s or more,

[Relationship 1]

$$C+Si/30+Mn/20+(Cr+Mo)/5 \geq 0.3,$$

where C, Si, Mn, Cr, and Mo represent carbon steel component content% in a matrix structure at a point of 1/4t in a thickness of a base steel sheet.

6. The method for manufacturing a hot-dip galvanized steel sheet of claim 5, wherein continuous annealing is performed in a temperature range of 810 to 850°C.

7. The method for manufacturing a hot-dip galvanized steel sheet of claim 5, wherein in addition to the steel sheet cooled to the temperature of 150°C or less at the average cooling rate of 5°C/s or more, temper rolling of less than 1% is performed.

8. The method for manufacturing a hot-dip galvanized steel sheet of claim 5, further comprising antimony (Sb): 0.05% or less (excluding 0%).

9. The method for manufacturing a hot-dip galvanized steel sheet of claim 5, further comprising a process of immersing the steel sheet cooled to the temperature of 150°C or less at the average cooling rate of 5°C/s or more, in a zinc pot of 440 to 480°C, and then cooling the same.

10. The method for manufacturing a hot-dip galvanized steel sheet of claim 5, further comprising a process of immersing the steel sheet cooled to the temperature of 150°C or less at the average cooling rate of 5°C/s or more, in a zinc pot of 440 to 480°C, and then heating the same in a GA furnace of 500 to 540°C, and then cooling the same.

[FIG. 1]

[FIG. 2]

[FIG. 3]

[FIG. 4]

## INTERNATIONAL SEARCH REPORT

| International application No. |
|---|
| **PCT/KR2023/020282** |

| A. | CLASSIFICATION OF SUBJECT MATTER |
|---|---|

**C22C 38/38**(2006.01)i; **C23C 2/02**(2006.01)i; **C23C 2/06**(2006.01)i; **C23C 2/26**(2006.01)i; **C23C 2/28**(2006.01)i; **C23C 2/40**(2006.01)i; **C22C 38/28**(2006.01)i; **C22C 38/26**(2006.01)i; **C22C 38/00**(2006.01)i; **C22C 38/32**(2006.01)i

According to International Patent Classification (IPC) or to both national classification and IPC

| B. | FIELDS SEARCHED |
|---|---|

Minimum documentation searched (classification system followed by classification symbols)

C22C 38/38(2006.01); B32B 15/01(2006.01); C21D 8/02(2006.01); C21D 9/46(2006.01); C22C 38/00(2006.01); C22C 38/58(2006.01); C22C 38/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 용융아연도금(hot dip galvanizing), 베이나이트(bainite), 마르텐사이트 (martensite), 페라이트(ferrite), 오스테나이트(austenite), 및 소둔(annealing)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0081529 A (POSCO) 16 June 2022 (2022-06-16)<br>See paragraphs [0041]-[0132]; tables 1-3; and claims 1-6. | 1-8 |
| Y | | 9,10 |
| Y | JP 7036274 B2 (NIPPON STEEL CORP.) 15 March 2022 (2022-03-15)<br>See paragraphs [0113] and [0114]. | 9,10 |
| X | KR 10-2019-0133739 A (NIPPON STEEL CORPORATION) 03 December 2019 (2019-12-03)<br>See paragraphs [0066]-[0116] and [0150]-[0245]; tables 1-4; claims 1 and 2; and figures 3 and 4. | 1,4-8 |
| A | JP 2022-034016 A (JFE STEEL CORP.) 02 March 2022 (2022-03-02)<br>See paragraphs [0090]-[0107]; tables 1-3; and figures 1-7. | 1-10 |

☑ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2024** | **21 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2"></td><td>International application No.<br>**PCT/KR2023/020282**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | US 2020-0338857 A1 (ARCELORMITTAL) 29 October 2020 (2020-10-29)<br>See paragraphs [0066]-[0136]; table 1; and figures 1 and 2. | 1-10 |

Form PCT/ISA/210 (second sheet) (July 2022)

**INTERNATIONAL SEARCH REPORT**
Information on patent family members

International application No.

**PCT/KR2023/020282**

| Patent document cited in search report | | | Publication date (day/month/year) | Patent family member(s) | | | Publication date (day/month/year) |
|---|---|---|---|---|---|---|---|
| KR | 10-2022-0081529 | A | 16 June 2022 | CN | 116635556 | A | 22 August 2023 |
| | | | | EP | 4261314 | A1 | 18 October 2023 |
| | | | | KR | 10-2490312 | B1 | 19 January 2023 |
| | | | | WO | 2022-124609 | A1 | 16 June 2022 |
| JP | 7036274 | B2 | 15 March 2022 | CN | 113272461 | A | 17 August 2021 |
| | | | | CN | 113272461 | B | 25 April 2023 |
| | | | | WO | 2020-189530 | A1 | 24 September 2020 |
| KR | 10-2019-0133739 | A | 03 December 2019 | CN | 110475888 | A | 19 November 2019 |
| | | | | CN | 110475888 | B | 15 October 2021 |
| | | | | EP | 3604582 | A1 | 05 February 2020 |
| | | | | EP | 3604582 | A4 | 02 September 2020 |
| | | | | EP | 3604582 | B1 | 26 January 2022 |
| | | | | JP | 6252715 | B1 | 27 December 2017 |
| | | | | KR | 10-2264783 | B1 | 14 June 2021 |
| | | | | US | 11326234 | B2 | 10 May 2022 |
| | | | | US | 2020-0024709 | A1 | 23 January 2020 |
| | | | | WO | 2018-179386 | A1 | 04 October 2018 |
| JP | 2022-034016 | A | 02 March 2022 | CN | 115715332 | A | 24 February 2023 |
| | | | | EP | 4141132 | A1 | 01 March 2023 |
| | | | | JP | 7031801 | B1 | 08 March 2022 |
| | | | | KR | 10-2023-0013273 | A | 26 January 2023 |
| | | | | US | 2023-0243014 | A1 | 03 August 2023 |
| | | | | WO | 2022-004820 | A1 | 06 January 2022 |
| US | 2020-0338857 | A1 | 29 October 2020 | CN | 111295460 | A | 16 June 2020 |
| | | | | CN | 111295460 | B | 06 September 2022 |
| | | | | EP | 3707290 | A1 | 16 September 2020 |
| | | | | EP | 3707290 | B1 | 01 December 2021 |
| | | | | JP | 2021-502481 | A | 28 January 2021 |
| | | | | JP | 7030187 | B2 | 04 March 2022 |
| | | | | KR | 10-2020-0070292 | A | 17 June 2020 |
| | | | | KR | 10-2374498 | B1 | 15 March 2022 |
| | | | | US | 11590734 | B2 | 28 February 2023 |
| | | | | US | 2023-0158774 | A1 | 25 May 2023 |
| | | | | WO | 2019-092468 | A1 | 16 May 2019 |
| | | | | WO | 2019-092526 | A1 | 16 May 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180165176
- JP 2010090432 A
- JP 2015106696 A